# DEMANDE DE BREVET EUROPEEN

(11) **EP 1 672 234 A2**
(43) Date de publication de la demande: **21.06.2006**
(21) Numéro de dépôt: 05301036.9
(22) Date de dépôt: 08.12.2005
(51) Int. Cl.: F16D 13/58

(54) **Ressort diaphragme pour mécanisme d'embrayage à disque**

(30) Priorité: 20.12.2004 FR 0453064
(71) Demandeur: Renault s.a.s., 92100 Boulogne Billancourt (FR)
(72) Inventeur: Chouchana, Richard, 92220 Bagneux (FR)

(57) **Abrégé**

Ressort diaphragme (10) de mécanisme d'embrayage à disque de véhicule automobile, comportant un disque élastique dont l'intérieur est découpé suivant des rayons pour former des becs radiaux (12) issus d'une couronne extérieure (11) du disque et dont les extrémités libres entourent un orifice central (14), une portion des becs formant une piste adaptée à coopérer avec une portée de roulement d'embrayage (30). Au moins une masse acoustique (70) recouvre au moins une portion de l'un des becs (12). Sur l'épaisseur de la masse (70), un créneau (72) est aménagé de façon que la masse comporte des portions épaisses (74) en alternance avec des portions minces (76), les portions épaisses étant raccordées aux becs (12) et les portions minces étant situées entre les becs. Mécanisme d'embrayage comportant un tel diaphragme.

## Description

La présente invention se rapporte à un ressort diaphragme pour mécanisme d'embrayage à disque de véhicule automobile.

On connaît depuis les années 1950 un ressort de mécanisme d'embrayage à disque, appelé ressort diaphragme, constitué d'un disque élastique, souvent sensiblement conique, dont l'intérieur est découpé suivant des rayons pour former des becs radiaux issus de la couronne extérieure du disque et dont les extrémités libres des becs entourent un orifice central.

Un mécanisme d'embrayage classique utilisant un tel diaphragme est constitué ainsi : un plateau presseur poussé par le ressort diaphragme appuie, en position embrayée, un disque d'embrayage sur un volant moteur, rendant ainsi solidaire en rotation le volant moteur et le disque d'embrayage bloqué en rotation par des cannelures sur un arbre, en espèce l'arbre primaire de la boîte de vitesses, qui se trouve ainsi mené. Un couvercle forme des appuis arrière permanents sur les becs radiaux du diaphragme, vers la couronne périphérique. Lorsqu'un roulement annulaire vient, en position débrayée, appuyer au centre du diaphragme sur les becs du ressort diaphragme, les becs basculent sur les appuis arrière et entraînent le recul de la couronne du diaphragme et donc la désolidarisation du disque d'embrayage et du plateau moteur. Lorsque le roulement reprend sa position normale embrayée, la force de ressort du diaphragme ramène la couronne en appui, avec une force constante, sur le disque d'embrayage. Un tel mécanisme avec un diaphragme ressort est connu par exemple dans le document FR2847317.

Le déplacement du roulement peut être commandé mécaniquement, hydrauliquement ou électriquement.

Le document FR2591692 décrit un dispositif amortissant annulaire associé à des becs de diaphragme de mécanisme d'embrayage. Ce dispositif amortissant peut avoir pour inconvénient de présenter des faiblesses de la qualité de l'amortissement des vibrations et de la longévité de l'anneau amortissant.

L'invention vise à améliorer un tel mécanisme, en particulier le ressort diaphragme.

L'invention a pour objet ressort diaphragme de mécanisme d'embrayage à disque de véhicule automobile, comportant un disque élastique dont l'intérieur est découpé suivant des rayons pour former des becs radiaux issus d'une couronne extérieure du disque et dont les extrémités libres entourent un orifice central, une portion des becs formant une piste adaptée à coopérer avec une portée de roulement d'embrayage, au moins une masse acoustique recouvrant au moins une portion d'une pluralité de becs. La masse comporte au moins une face pourvue d'un créneau sur l'épaisseur de la masse, le créneau étant aménagé de façon que la masse comporte des portions épaisses en alternance avec des portions minces, les portions épaisses étant raccordées aux becs et les portions minces étant situées entre les becs.

Avantageusement, la masse acoustique permet d'adapter la fréquence de résonance du diaphragme, en fixant ladite fréquence à une valeur favorable. La masse acoustique est adaptée à décaler la fréquence de résonance du diaphragme pourvu de masse acoustique par rapport à celle d'un diaphragme sans masse afin d'éviter qu'un utilisateur puisse percevoir un bruit dit de crissement des becs de diaphragme vibrant à par rapport au roulement lors d'un glissement des becs par rapport au roulement.

La masse acoustique peut être en matériau élastomère.

La masse acoustique peut recouvrir au moins une portion de chacun des becs.

La masse peut être conformée en une couronne.

La masse peut comporter au moins une zone de souplesse adaptée à être placée entre les becs.

Le créneau aménagé sur une face de la masse peut être en correspondance d'un créneau aménagé sur l'autre face de la masse.

Des moyens d'accrochage de la masse sur le diaphragme peuvent comporter un adhésif.

L'invention a aussi pour objet un mécanisme d'embrayage comportant un diaphragme monté mobile entre position embrayée et une position débrayée, ledit diaphragme étant adapté en position embrayée à accoupler un volant moteur et un arbre de boîte de vitesse, ledit diaphragme étant adapté en position débrayée à désaccoupler le volant moteur et l'arbre de boîte de vitesse, un roulement d'embrayage dont une première bague est reliée à un carter et dont une deuxième bague est montée rotative par rapport à la première bague étant en contact avec des becs du diaphragme, le diaphragme comportant des caractéristiques énoncées ci-dessus.

Avantageusement, le mécanisme selon l'invention n'entre pas en résonance lors d'un glissement des becs de diaphragme sur le roulement, par exemple au ralenti moteur, en position embrayée du diaphragme.

D'autres caractéristiques et avantages de l'invention apparaîtront clairement à la lecture de la description suivante du mode de réalisation non limitatif de celle-ci, en liaison avec les dessins annexés sur lesquels :
- la figure 1 est une vue en perspective d'un ressort diaphragme de l'invention et de son couvercle,
- la figure 2 est une vue en coupe schématique d'une commande hydraulique d'embrayage,
- la figure 3 est une vue en coupe schématique d'une commande d'embrayage par câble,
- la figure 4 est une section schématique d'un mécanisme avec une commande hydraulique d'embrayage, représentée en position embrayée en bas de la figure et débrayée en haut de la figure,
- la figure 5 est une vue de détail d'un récepteur hydraulique et des becs du mécanisme de la figure 4.

Le mécanisme de commande d'embrayage comporte essentiellement un ensemble de friction symbolisé en 1 sur lequel peut appuyer un ressort diaphragme 10 maintenu dans un couvercle 20 vissé au volant moteur 50 solidaire de l'arbre menant non représenté. L'appui du ressort diaphragme 10 est fonction du déplacement axial d'un roulement annulaire d'embrayage 30. Le roulement est souvent appelé butée.

L'ensemble de friction 1 comprend le disque annulaire de friction avec son moyeu de friction cannelé 3 solidaire en rotation de l'arbre mené 4. Le disque annulaire est destiné à s'engager par frottement sur le plateau moteur 50 auquel il est adjacent, lorsqu'il est poussé par le plateau presseur 5. Le plateau presseur 5 est lui-même poussé, sur des bossages d'appui 6, par la couronne marginale 11 du ressort diaphragme 10, laquelle couronne s'appuie intérieurement sur des bossages d'appui 21 du couvercle 20.

Le ressort diaphragme 10 comporte, outre la couronne 11, une pluralité de becs radiaux 12 dont les extrémités, destinées à coopérer avec le roulement 30 en formant une piste, laissent un orifice central 14 pour le passage de l'arbre 4.

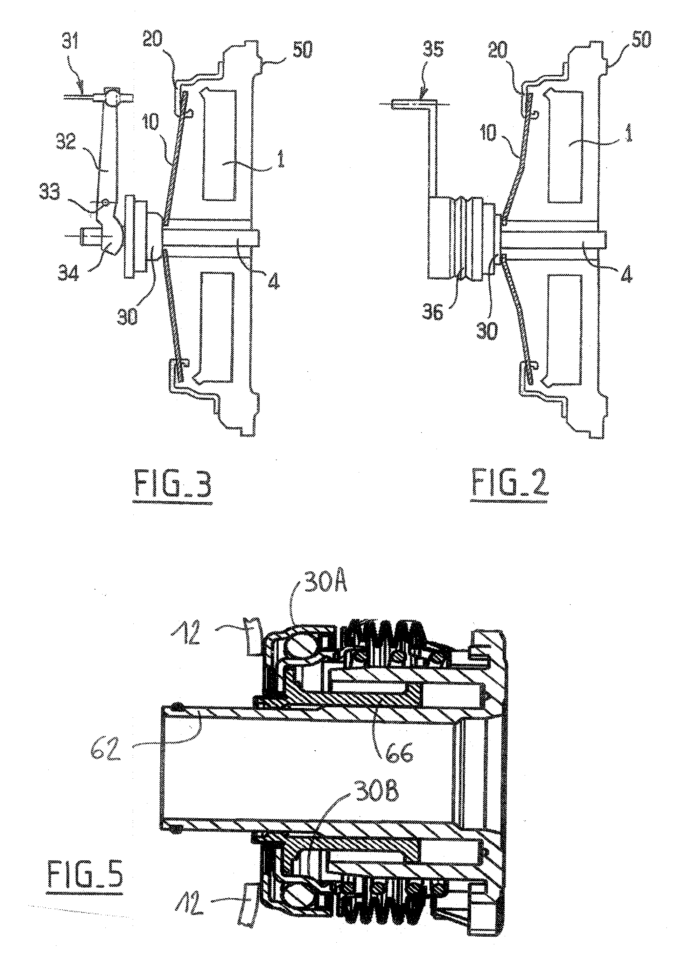

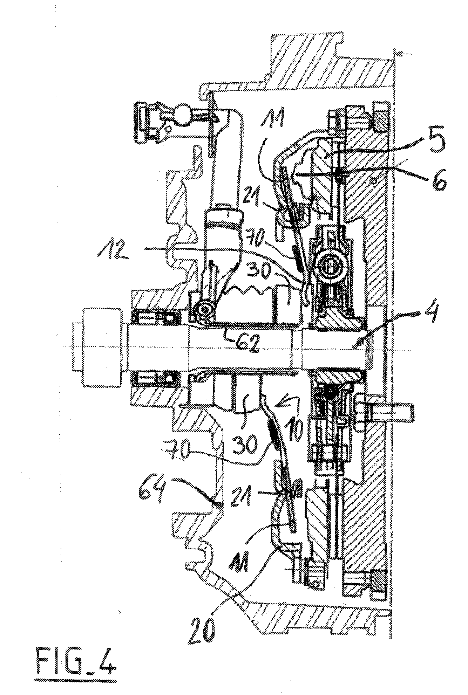

Dans une commande hydraulique (figures 2 à 5), une pipette 35 d'un circuit de commande hydraulique envoie un fluide sous pression dans un récepteur comportant une chambre d'un vérin 36 susceptible de pousser le roulement annulaire 30 vers le ressort diaphragme 10. Un ressort de précontrainte est destiné à assurer un contact permanent entre le diaphragme et le roulement 30. Ici, le mécanisme d'embrayage n'a pas de garde.

Un manchon 62 du vérin 36, dans lequel l'arbre 4 tourne librement, est solidaire d'un carter 64 du mécanisme.

Un piston 66 du vérin 36, actionné hydrauliquement sur le manchon 62, permet le déplacement du roulement 30 entre les positions embrayée et débrayée.

Une première bague annulaire 30B, dite fixe, du roulement 30 est montée fixe par rapport au piston 66.

L'extrémité libre de chaque bec 12 est en contact permanent avec une deuxième bague annulaire 30A dite mobile du roulement 30.

Le ressort de précontrainte est monté entre la deuxième bague 30B et le manchon 62.

Dans une commande par câble (figures 3), le déplacement du roulement 30 est obtenu mécaniquement, grâce au câble d'embrayage 31 relié à la pédale d'embrayage, actionnant une fourchette de débrayage 32 pivotante sur un axe 33 et poussant par son extrémité en fourche 34 à l'arrière de la butée 30 de manière à la déplacer vers le ressort diaphragme 10, en position de débrayage. C'est la force de rappel du ressort diaphragme 10 qui ramène la butée 30 et la pédale d'embrayage en position embrayée.

Au moins une portion de l'un des becs 12 est recouvert de masse acoustique afin d'optimiser la prestation acoustique du diaphragme en évitant qu'il vibre selon sa fréquence de résonance lorsqu'il y a une vitesse différentielle entre les becs et la première bague 30A du roulement 30.

La masse acoustique permet d'éviter une mise en résonance du mécanisme d'embrayage. Avantageusement, il n'est alors pas nécessaire, pour augmenter la pression entre le roulement et les becs et éviter un délestage de la pression, d'utiliser un ressort de précontrainte ou un diaphragme dont la raideur du tarage annule les vibrations.

Le phénomène de mise en résonance doit être en particulier évité quand le moteur tourne au ralenti, alors qu'il y a un glissement entre les becs qui tournent sensiblement à 850 tr/min et la bague de roulement qui glisse et tourne sensiblement à 450 tr/min.

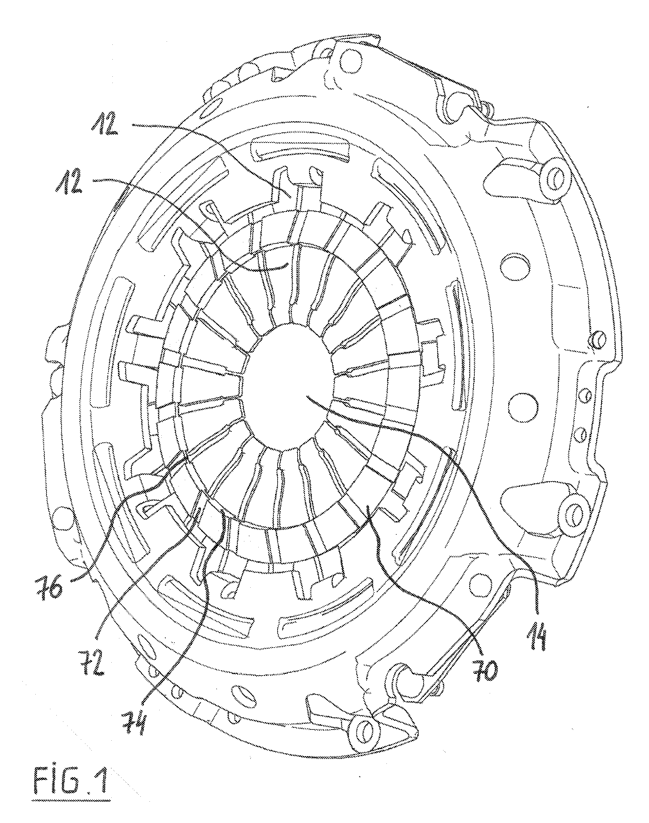

Dans le mode de réalisation de la figure 1, une portion sensiblement médiane de chaque bec 12 est recouverte de masse acoustique 70. La masse acoustique est une couronne en élastomère collée sur le diaphragme 10, sensiblement à mi longueur des becs 12. Le collage est effectué par un adhésif usuel qui respecte les contraintes inhérentes à l'utilisation dans le mécanisme d'embrayage.

Dans l'exemple représenté, la couronne est crénelée sur chacune de ses faces, sur l'épaisseur de la couronne. Chaque créneau 72 sur une face de la couronne est en correspondance d'un créneau 72 sur la face opposée de la couronne de façon que la couronne comporte des portions dites épaisses 74 en alternance avec des portions dites minces 76. Les portions épaisses 74 sont raccordées aux becs tandis que les portions minces 76 sont situées entre les becs 12. Entre les becs, les portions minces 76 au niveau des créneaux 72 forment des zones de souplesse de la masse 70.

La masse est par exemple en polybutadiène ou copolymère.

Selon une variante non représentée, il y a une pluralité de masses acoustiques, en particulier une masse acoustique sur chacun des becs, par exemple à mi longueur de bec.

D'autres moyens d'accrochage que le collage sont envisageables, par exemple l'accrochage des masses par l'intermédiaires de crochets type crochets d'encliquetage.

## Revendications

1. Ressort diaphragme (10) de mécanisme d'embrayage à disque de véhicule automobile, comportant un disque élastique dont l'intérieur est découpé suivant des rayons pour former des becs radiaux (12) issus d'une couronne extérieure (11) du disque et dont les extrémités libres entourent un orifice central (14), une portion des becs formant une piste adaptée à coopérer avec une portée de roulement d'embrayage (30), au moins une masse acoustique (70) recouvrant au moins une portion d'une pluralité de becs (12), **caractérisé en ce que** la masse (70) comporte au moins une face pourvue d'un créneau (72) sur l'épaisseur de la masse (70), le créneau (72) étant aménagé de façon que la masse comporte des portions épaisses (74) en alternance avec des portions minces (76), les portions épaisses (74) étant raccordées aux becs (12) et les portions minces (76) étant situées entre les becs (12).

2. Ressort selon la revendication 1 , **caractérisé en ce que** la masse acoustique (70) est en matériau élastomère.

3. Ressort selon l'une quelconque des revendications précédentes, **caractérisé en ce que** la masse acoustique (70) recouvre au moins une portion de chacun des becs (12).

4. Ressort selon l'une quelconque des revendications précédentes, **caractérisé en ce que** la masse (70) est conformée en une couronne.

5. Ressort selon l'une quelconque des revendications précédentes, **caractérisé en ce que** la masse (70) comporte au moins une zone de souplesse (72) adaptée à être placée entre les becs (12).

6. Ressort selon l'une quelconque des revendications précédentes, **caractérisé en ce que** le créneau (72) aménagé sur une face de la masse (70) est en correspondance d'un créneau (72) aménagé sur l'autre face de la masse (70).

7. Ressort selon l'une quelconque des revendications précédentes, **caractérisé en ce que** des moyens d'accrochage de la masse (70) sur le diaphragme (10) comportent un adhésif.

8. Mécanisme d'embrayage comportant un diaphragme (10) monté mobile entre position embrayée et une position débrayée, ledit diaphragme étant adapté en position embrayée à accoupler un volant moteur (50) et un arbre de boîte de vitesse (4), ledit diaphragme étant adapté en position débrayée à désaccoupler le volant moteur et l'arbre de boîte de vitesse, un roulement (30) d'embrayage dont une première bague (30B) est reliée à un carter (64) et dont une deuxième bague (30A) est montée rotative par rapport à la première bague étant en contact avec des becs (12) du diaphragme, **caractérisé en ce que** le diaphragme (10) est selon l'une quelconque des revendications précédentes.
